# EUROPEAN PATENT SPECIFICATION

(11) **EP 2 059 308 B1**
(45) Date of publication and mention of the grant of the patent: **29.08.2012**
(21) Application number: 07818103.9
(22) Date of filing: 11.09.2007
(51) Int. Cl.: A62D 1/00, C09K 21/04

(54) **FLAME RETARDANT COMPOSITION**
FLAMMSCHUTZMITTELZUSAMMENSETZUNG
COMPOSITION RETARDATRICE DE FLAMMES

(30) Priority: 14.09.2006 ES 200602333
(43) Date of publication of application: 20.05.2009
(73) Proprietor: Budenheim Iberica, S.L. Sociedad en Comandita, 50784 La Zaida (ES)
(72) Inventor: MANS FIBLA, Vicente, 50784 La Zaida (ES); PARDO GALVE, Jose, Manuel, 50784 La Zaida (ES); TORTOSA GIMENO, Eduardo, 50784 La Zaida (ES); MIGUEL MONZON, Joaquin, 50784 La Zaida (ES); GARCIA MARTINEZ, David, 50784 La Zaida (ES)
(74) Representative: Sugrañes Patentes y Marcas
(86) International application number: PCT/EP2007/007901
(87) International publication number: WO 2008/031559

(56) References cited:
- WO-A-02/43812
- WO-A-91/09093
- CN-A- 1 100 592
- JP-A- 8 325 574
- KR-A- 8 200 993
- US-A- 3 960 735
- PHILIP DAVIS ET AL.: "The sensitisation of thermal decomposition of ammonium polyphosphate by selected metal ions and their potential for improved cotton fabric flame retardancy." POLYMER DEGRADATION AND STABILITY, vol. 88, no. 1, 2005, pages 114-122, XP002487424

## Description

### Technical Field of the invention

The present invention relates to a flame retardant of the type used to fight forest fires, aimed at preventing or retarding the propagation thereof. In particular, the flame retardant contains liquid ammonium polyphosphates in its composition.

### Background of the invention

At the start of the 60s, the use of aerial means to fight forest fires became widespread to prevent or retard their propagation, spraying flame retardants, also known as fire retardants, over the affected area of forest.

The composition of fire retardants typically contains a fire-suppressing electrolyte comprised of salts, such as ammonium phosphates and sulphates, viscosity modifiers and pigments.

Due to the ease with which they can be transported, flame retardants contain liquid polyphosphates, in addition to corrosion inhibitors, given the corrosive action of liquid polyphosphates on the aluminium components or deposits used in airplanes.

US 3196108 and US 3257316 disclose typical flame-retardant compositions, consisting of water-based mono/diammonium salt solutions derived from orthophosphoric acid in a thickening agent such as attapulgite, guar gum or alginates, with colouring agents to improve the visibility of the retardant upon spraying and of the corrosion inhibitors such as potassium dichromate.

US 3960735 disclosed that the tendency of liquid polyphosphates to corrode aluminium could be inhibited by the anti-corrosive action of ferric ferrocyanide, due to which said component was included as an inhibiting agent in the composition of flame retardants.

Nevertheless, bearing in mind the environmental impact produced by ferric ferrocyanide, new inhibitors are being investigated, particularly iron salt additives, such as for example, pyrophosphates, oxalates and citrates, as described in WO 02/43812.

In addition to the use of aerial means in forest-fire extinction and prevention, we must not forget that, when atmospheric conditions prevent their use, the only other fire-fighting means are terrestrial. Said terrestrial means include tankers and auto-pumps, the deposits of which contain the flame retardant to be sprayed over the affected area. Most of these deposits are made of galvanized iron, a material which, like aluminium, is susceptible to the corrosive action of the liquid ammonium polyphosphate composition of the retardants.

The corrosion of galvanized iron raises the need to find new flame-retarding compositions that contain corrosion inhibitors specifically recommended for treatment of galvanized iron, as experience has proven that the inhibitors used in the previously described retardants, such as ferrous pyrophosphate, sodium ferrocyanide or magnesium phosphate, are not effective when applied to galvanized iron.

### Explanation of the invention

With the object of providing a solution to the problems raised, we hereby disclose a new flame-retarding composition, specifically aimed at terrestrial fire-fighting means, of the type containing liquid ammonium polyphosphate.

In essence, flame retardant composition of the present invention is characterized in that it contains zinc sulphate, in its anhydrous or hydrated form, and calcium phosphate with a grain size of 1 to 10 microns in the range of 0.01% to 5% by weight of total ammonium polyphosphate plus zinc sulphate content as a corrosion inhibitor. The addition of zinc sulphate and calcium phosphate with a grain size of 1 to 10 microns to the retarding composition of the present invention produces a synergic action with a clear decrease in galvanized iron corrosion rates. Highly satisfactory levels of protection against corrosion of galvanized iron, of which the deposits of the terrestrial fire-fighting means that transport the flame retardant are comprised, are reached using zinc sulphate in its anhydrous or hydrated form, and calcium phosphate with a grain size of 1 to 10 microns in the range of 0.01% to 5% by weight of total ammonium polyphosphate plus zinc sulphate content as compared to other corrosion inhibitors.

According to a characteristic of the invention, liquid ammonium polyphosphate has a polymerization index in the range of 10% to 70%, the ammonium nitrogen concentration is in the range of 7% to 12% by weight of total ammonium polyphosphate content and the phosphoric anhydride concentration is in the range of 20% to 37% by weight of total ammonium polyphosphate content.

According to another characteristic of the invention, the zinc sulphate concentration, in its anhydrous or hydrated form, is in the range of 0.01% to 5% by weight of total ammonium polyphosphate plus zinc sulphate content.

Preferably, the zinc sulphate concentration, in its anhydrous or hydrated form, shall be in the range of 0.1% to 0.5% by weight with respect to total ammonium polyphosphate plus zinc sulphate content.

In accordance with another characteristic of the invention, the polymerization index of liquid ammonium polyphosphate is in the range of 20% to 55%.

According to another characteristic of the invention, the polymerization index of liquid ammonium polyphosphate is approximately equal to 25%.

In accordance with another characteristic of the invention, the ammonium nitrogen concentration is approximately equal to 10% by weight of total ammonium polyphosphate content.

According to another characteristic of the invention, the phosphoric anhydride concentration is approximately equal to 30% by weight of total ammonium polyphosphate content.

According to another characteristic of the retarding composition of the present invention, said composition contains at least one moisturizing agent and at least one colouring agent.

Within the context of the present invention, "polymerization index of ammonium polyphosphate" shall be understood as percent by weight concentration of polyphosphate in the mixture resulting from the polymerization reaction.

### Detailed description of the invention

Although the detailed description expounded below represents a complete and clear description of the present invention for a person skilled in the art, it must not be considered limiting in the essential aspects of the objects thereof.

Terrestrial fire-fighting means are supplied with deposits that contain flame-retarding products which are sprayed over the affected areas, the main component of which is ammonium polyphosphate. Ammonium polyphosphate makes flame retardants corrosive to aluminium and galvanized iron, materials which comprise the hose coupling devices and tanks of terrestrial fire-fighting means, respectively.

Despite the fact that there are many flame retardants that include corrosion inhibitors in their composition, these have been known to be efficient against the corrosion of aluminium but inefficient in the case of galvanized iron.

In an effort to reduce or eliminate the corrosion tendency of galvanized iron, an inorganic zinc salt has been added to the liquid ammonium polyphosphate, specifically zinc sulphate, in its anhydrous or hydrated form, as a corrosion inhibitor, thereby obtaining the flame retardant of the present invention, which can be transported by the terrestrial fire-fighting means.

While the corrosion-inhibiting effectiveness of zinc sulphate, in its anhydrous or hydrated form, in the case of galvanized iron has been proven (see Test 2), other salts such as sodium ferrocyanide, ferrous pyrophosphate, calcium phosphate, magnesium phosphate, calcium magnesium phosphate or modified alkaline phosphates, all of which are considered corrosion inhibitors, have not reached the desired levels of protection against the corrosion of said material.

Zinc sulphate, in its anhydrous or hydrated form, is added to the liquid ammonium polyphosphate in a quantity of no less than 0.01% and no more than 5% by weight of ammonium polyphosphate content, preferably in the range of 0.1% to 0.5% by weight.

As demonstrated by the results of Test 1, better results are achieved in reducing the corrosiveness of liquid ammonium polyphosphate upon adding the zinc sulphate, if the liquid ammonium polyphosphate has a polymerization degree of no less than 10% and no more than 70%, preferably 25%, with a nitrogen concentration of no less than 7% and no more than 15% by weight of total ammonium polyphosphate content, preferably 10%, and a phosphoric anhydride (P₂O₅) concentration of no less than 20% and no more than 37% by weight of total ammonium polyphosphate content, preferably 30% by weight.

In addition to the liquid ammonium polyphosphate and zinc sulphate, in its anhydrous or hydrated form, added as a corrosion inhibitor, the composition of the flame retardant, shall also contain calcium phosphate with a grain size of between 1 and 10 microns, in concentrations of no less than 0.01% and no more than 5% by weight with respect to the ammonium polyphosphate and zinc sulphate, preferably in the range of 0.1% and 0.5%, thereby producing a synergic effect that boosts corrosion inhibition to minimum corrosion levels or total inhibition (see Test 3).

The results of the tests performed, which show a clear reduction in the flame retardant's corrosiveness with respect to galvanized iron, are described below.

### Test 1:

The test described hereunder was performed following the corrosion testing method established by the USDA Forest Service for aerial fire-fighting means. In accordance with said method, different samples of liquid ammonium polyphosphates in their supplied form were subjected to testing.

All the ammonium polyphosphate samples corresponded to 10.34.0 type liquid ammonium polyphosphate, where 10 corresponds to percent by weight concentration of ammonium nitrogen with respect to the weight of ammonium polyphosphate, and 34 to phosphoric anhydride (P₂O₅) concentration expressed as percent by weight with respect to the ammonium polyphosphate, and to 10.30.0 type liquid ammonium polyphosphate, where 10 corresponds to percent by weight concentration of ammonium nitrogen with respect to the weight of ammonium polyphosphate, and 30 to phosphoric anhydride (P₂O₅) concentration expressed as percent by weight of ammonium polyphosphate, in their supplied form and with no additives.

The tests were performed using both concentrated and diluted ammonium polyphosphate. The terrestrial application of the retardant requires dilution in water in a proportion of one part of concentrate and between two and four parts of water. The diluted solutions in the samples were prepared by mixing a volume of concentrated ammonium polyphosphate with four volumes of water.

The test tubes used to perform the test were made of galvanized iron measuring 103x30x0.5 mm.

Once cleaned (degreased), dried and weighed, the test tubes were immersed, both fully and partially, suspended with Nylon thread, in glass jars with screw tops containing the flame retardants described below as examples and which are based on ammonium polyphosphates with different additives, both diluted in water and undiluted. The test tubes were tested by means of full and partial immersion. The latter were immersed to 50% of their length, i.e. 51.5 cm from their base.

The glass jars with the test tubes fully and partially immersed in the flame retardant were stored for ninety days at both room temperature and 50ºC. After the ninety-day period, the test tubes were removed, cleaned, dried and weighed in order to determine the corrosiveness of the samples, expressed in mm/year, calculated based on the weight loss of the test tube exposed to the action of the retardants described below.

Each of the flame retardant samples tested proceeded from different manufacturing batches.

The results obtained from the test tubes are shown in Table 1 below.

**Table 1**

| **Test 1. Corrosiveness of galvanized iron [mm/year]** | | | | | | | | |
|---|---|---|---|---|---|---|---|---|
| **Retardant samples** | **Concentrated** | | | | **Diluted** | | | |
| 10.34.0 ammonium polyphosphate | **25 ºC full** | **25ºC partial** | **50 ºC full** | **50 ºC partial** | **25 ºC full** | **25ºC partial** | **50ºC full** | **50ºC partial** |
| Sample 1 | 0,124 | 0,128 | 0,247 | 0,285 | 0,139 | 0,154 | 0,279 | 0,313 |
| Sample 2 | 0,132 | 0,133 | 0,224 | 0,264 | 0,156 | 0,156 | 0,284 | 0,320 |
| Sample 3 | 0,115 | 0,109 | 0,228 | 0,268 | 0,148 | 0,150 | 0,270 | 0,295 |

| 10.30.0 ammonium polyphosphate | | | | | | | | |
|---|---|---|---|---|---|---|---|---|
| Sample 5 | 0,101 | 0,105 | 0,175 | 0,209 | 0,055 | 0,070 | 0,063 | 0,082 |
| Sample 6 | 0,095 | 0,101 | 0,189 | 0,212 | 0,062 | 0,069 | 0,075 | 0,100 |
| Sample 7 | 0,098 | 0,104 | 0,169 | 0,194 | 0,049 | 0,058 | 0,059 | 0,078 |

The corrosiveness of diluted ammonium polyphosphate, used in this form to control fires, is two times lower at 25 ºC and three times lower at 50 ºC using 10.30.0 ammonium polyphosphate instead of 10.34.0.

### Test 2

This test consisted of adding different corrosion inhibitors to 10.30.0 liquid ammonium polyphosphate. Said corrosion inhibitors included zinc and calcium salts, and double calcium and magnesium salts, specifically, zinc sulphate, zinc chloride, calcium phosphate, modified alkali phosphate, magnesium phosphate and calcium magnesium phosphate.

The corrosion inhibitors were added in concentrations of 0.2% by weight of total ammonium polyphosphate content, by shaking, and the samples were tested following the procedure described in Test 1.

The corrosiveness results, expressed in mm/year, are shown in Table 2 below.

With respect to reducing the corrosiveness of ammonium polyphosphate by adding zinc sulphate (Sample 6), Table 2 reveals that corrosion decreases approximately between ten and twenty-six times in comparison to the corrosiveness results obtained from Samples 1, 2 and 3, in the case of concentrated ammonium polyphosphate, and decreases approximately between ten and seventeen times in the case of diluted polyphosphate.

If we compare the decrease in corrosion of Sample 4 to the results of Sample 6, by using concentrated ammonium polyphosphate we also obtain decreases in corrosion of between nineteen and twenty-six times, while if we use diluted ammonium polyphosphate the decrease in corrosiveness is between one-and-a-half and two-and-a-half times.

Finally, we can observe that Sample 6 shows, in comparison to the results of Sample 5, a decrease in corrosiveness of between eleven-and-a-half and seventeen-and-a-half times in the case of concentrated ammonium polyphosphate, while in the case of diluted ammonium polyphosphate, corrosiveness decreased between one-and-a-half and two-and-a-half times.

This demonstrates that adding zinc sulphate, in its anhydrous or hydrated form, to the liquid ammonium polyphosphate, produces an excellent decrease in the corrosive action of the ammonium polyphosphate against the galvanized iron, as compared to the results obtained when other corrosion inhibitors were added instead of zinc sulphate, such as in the case of Samples 1 to 5.

The excellent decrease in the corrosiveness of the ammonium polyphosphate resulting from the addition of zinc sulphate, in concentrations of no less than 0.01% and no more than 5%, preferably in the range of 0.1% to 0.5% by weight, makes said composition highly useful when applied to flame retardants used in fire extinction and prevention with terrestrial means, as said means are comprised of tankers and auto-pumps, the galvanized iron deposits of which contain the flame retardant to be sprayed over the affected area. The addition of zinc sulphate to the liquid ammonium polyphosphate that comprises the flame retardant prevents or greatly reduces the corrosive action of the ammonium polyphosphate against the galvanized iron deposit.

**Table 2**

| **Test 2. Corrosiveness of galvanized iron [mm/year]** | | | | | | | | | |
|---|---|---|---|---|---|---|---|---|---|
| **Retardant** | **Corrosion inhibitor** | **Concentrated** | | | | **Diluted** | | | |
| **10.30.0 ammonium polyphosphate** | | **25 ºC full** | **25 ºC Partial** | **50 ºC full** | **50 ºC partial** | **25 ºC full** | **25 ºC partial** | **50 ºC full** | **50 ºC partial** |
| Sample 1 | Calcium magnesium phosphate | 0.198 | 0.207 | 0.264 | 0.315 | 0.139 | 0.154 | 0.279 | 0.313 |
| Sample 2 | Magnesium phosphate | 0.132 | 0.133 | 0.224 | 0.264 | 0.156 | 0.156 | 0.284 | 0.320 |
| Sample 3 | Modified alkali phosphate | 0.115 | 0.109 | 0.228 | 0.268 | 0.148 | 0.15 | 0.27 | 0.295 |
| Sample 4 | Calcium phosphate | 0.180 | 0.188 | 0.240 | 0.310 | 0.032 | 0.040 | 0.051 | 0.089 |
| Sample 5 | Zinc chloride | 0.095 | 0.115 | 0.149 | 0.210 | 0.020 | 0.022 | 0.037 | 0.051 |
| Sample 6 | Zinc sulphate | 0.008 | 0.010 | 0.01 | 0.012 | 0.009 | 0.014 | 0.017 | 0.019 |

### Test 3

This test consisted of adding calcium phosphate with a grain size of between 1 to 10 microns, as previously described, to a mixture of 10.30.0 liquid ammonium polyphosphate, having previously added zinc sulphate in a proportion of 0.2% by weight of total ammonium polyphosphate and zinc sulphate content, to which the calcium phosphate with a grain size of between 1 to 10 microns manufactured by CFB BUDENHEIM under the trade name BUDIT 226 was added in a proportion of 0.2% by weight of total ammonium polyphosphate plus zinc sulphate content, using the same shaking system and procedure as that of Test 2.

Corrosiveness results, expressed in mm/year, are shown in Table 3 below, where the synergic effect produced between the zinc sulphate and calcium phosphate with a grain size of between 1 to 10 microns is obvious.

In this way, if the corrosiveness results of Sample 6 were already excellent, demonstrating the marked tendency to reduce the corrosiveness of the ammonium polyphosphate upon addition of zinc sulphate, the results shown in Table 3 demonstrate that corrosion reaches minimum levels or even disappears when calcium phosphate with a grain size of between 1 to 10 microns is also added in a proportion of no less than 0.01 % and no more than 5%, preferably in the range of 0.1 % to 0.5%, by weight of total ammonium polyphosphate plus zinc sulphate content.

Said tests reveal, in a clear and unequivocal manner, that flame-retarding compositions based on liquid ammonium polyphosphate that contain zinc sulphate, in addition to the usual components of this type of mixtures, such as thickeners, colourings, moisturizers, etc., are excellent retarding compositions while having a minimum or non-corrosive action. That is, said compositions can be transported in galvanized iron barrels or tanks without corroding them.

Additionally and as previously indicated, if the liquid ammonium polyphosphate-based retarding composition contains zinc sulphate and calcium phosphate with a grain size of between 1 to 10 microns, its anti-corrosive action is even more pronounced.

Following this detailed description of the invention, it is obvious that it includes any combination of moisturizers, thickeners (magnesium silicate, hydrated magnesium silicates, gums, etc.) and/or colourings.

**Table 3**

| **Test 3. Corrosiveness of galvanized iron [mm/year]** | | | | | | | | | |
|---|---|---|---|---|---|---|---|---|---|
| **Retardant** | **Corrosion inhibitor** | **Concentrated** | | | | **Diluted** | | | |
| **Ammonium polyphosphate + zinc sulphate** | | **25 ºC full** | **25 ºC Partial** | **50 ºC full** | **50 ºC partial** | **25 ºC full** | **25 ºC partial** | **50 ºC full** | **50 ºC partial** |
| Sample 1 | BUDIT 226 | no corrosion | no corrosion | 0.005 | 0.01 | no corrosion | no corrosion | 0.01 | 0.012 |

## Claims

1. Corrosion inhibitor mixture for ammonium polyphosphate flame-retardant compositions, **characterized in that** it comprises zinc sulphate, in its anhydrous or hydrated form, and a proportion of calcium phosphate with a grain size of between 1 to 10 microns in the range of 0.01% to 5% by weight of total ammonium polyphosphate plus zinc sulphate content.

2. Corrosion inhibitor mixture according to claim 1, **characterized in that** the proportion of calcium phosphate with a grain size of between 1 to 10 microns is in the range of 0.1% to 0.5% by weight of total ammonium polyphosphate plus zinc sulphate content.

3. Corrosion inhibitor mixture according to claim 1 or 2, **characterized in that** the zinc sulphate concentration, in its anhydrous or hydrated form, is in the range of 0.01% to 5% by weight with respect to total ammonium polyphosphate plus zinc sulphate content.

4. Corrosion inhibitor mixture according to claim 3, **characterized in that** the zinc sulphate concentration, in its anhydrous or hydrated form, is in the range of 0.1% to 0.5% by weight with respect to total ammonium polyphosphate plus zinc sulphate content.

5. Flame retardant composition, particularly aimed at fire-fighting with terrestrial means, of the type that contains a liquid ammonium polyphosphate, **characterized in that** it comprises the corrosion inhibitor mixture as defined in any one of claims 1 to 4.

6. Flame retardant composition, according to claim 5, **characterized in that** the liquid ammonium polyphosphate has a polymerization index in the range of 10% to 70%, an ammonium nitrogen concentration in the range of 7% to 12% by weight of total ammonium polyphosphate content and a phosphoric anhydride concentration in the range of 20% to 37% by weight of total ammonium polyphosphate content.

7. Flame retardant composition, according to claim 5 or 6, **characterized in that** the polymerization index of the liquid ammonium polyphosphate is in the range of 20% to 55%.

8. Flame retardant composition, according to claim 7, **characterized in that** the polymerization index of the liquid ammonium polyphosphate is approximately equal to 25%.

9. Flame retardant composition, according to any one of claims 5 to 8, **characterized in that** the ammonium nitrogen concentration present in the ammonium polyphosphate is approximately equal to 10% by weight of total ammonium polyphosphate content.

10. Flame retardant composition, according to any one of claims 5 to 9, **characterized in that** the phosphoric anhydride concentration present in the ammonium polyphosphate is approximately equal to 30% by weight of total ammonium polyphosphate content.

11. Flame retardant composition, according to any one of claims 5 to 10, **characterized in that** it contains at least one moisturizing agent and at least one colouring agent.

12. Method for inhibiting the corrosiveness of liquid ammonium polyphosphate flame-retardant compositions as defined in any one of claims 5 to 11, by incorporating therein a corrosion inhibitor mixture as defined in any one of claims 1 to 4.

13. Method according to claim 12, for inhibiting the corrosion of galvanized iron deposits from terrestrial fire-fighting means.

14. Method according to claim 13, for inhibiting the corrosion of galvanized iron to less than 0.012 mm per year.

## Patentansprüche

1. Korrosionshemmende Mischung für flammenhemmende Ammoniumpolyphosphat-Zusammensetzungen, **dadurch gekennzeichnet, dass** sie Zinksulfat, in seiner wasserfreien oder hydrierten Form, und einen Anteil an Calciumphosphat mit einer Korngröße von zwischen 1 und 10 Mikrometer im Bereich von 0,01 Gew.-% bis 5 Gew.-% vom gesamten Ammoniumpolyphosphat- plus Zinksulfatgehalt, umfasst.

2. Korrosionshemmende Mischung nach Anspruch 1, **dadurch gekennzeichnet, dass** der Anteil an Calciumphosphat mit einer Korngröße von zwischen 1 und 10 Mikrometer im Bereich von 0,01 Gew.-% bis 0,5 Gew.-% vom gesamten Ammoniumpolyphosphat- plus Zinksulfatgehalt liegt.

3. Korrosionshemmende Mischung nach Anspruch 1 oder nach Anspruch 2, **dadurch gekennzeichnet, dass** die Zinksulfatkonzentration, in seiner wasserfreien oder hydrierten Form, im Bereich von 0,01 Gew.-% bis 5 Gew.-% in Bezug auf den gesamten Ammoniumpolyphosphat- plus Zinksulfatgehalt liegt.

4. Korrosionshemmende Mischung nach Anspruch 3, **dadurch gekennzeichnet, dass** die Zinksulfatkonzentration, in seiner wasserfreien oder hydrierten Form, im Bereich von 0,1 Gew.-% bis 0,5 Gew.-% in Bezug auf den gesamten Ammoniumpolyphosphat- plus Zinksulfatgehalt liegt.

5. Flammenhemmende Zusammensetzung, insbesondere für die Brandbekämpfung mit terrestrischen Mitteln bestimmt, vom Typ der ein flüssiges Ammoniumpolyphosphat enthält, **dadurch gekennzeichnet, dass** sie die korrosionshemmende Mischung nach einem der Ansprüche 1 bis 4 umfasst.

6. Flammenhemmende Zusammensetzung nach Anspruch 5, **dadurch gekennzeichnet, dass** das flüssige Ammoniumpolyphosphat einen Polymerisationsindex im Bereich von 10% bis 70%, eine Ammoniumstickstoffkonzentration im Bereich von 7 Gew.-% bis 12 Gew.-% vom gesamten Ammoniumpolyphosphatgehalt und eine Phosphoranhydridkonzentration im Bereich von 20 Gew.-% bis 37 Gew.-% vom gesamten Ammoniumpolyphosphatgehalt, hat.

7. Flammenhemmende Zusammensetzung nach den Ansprüchen 5 oder 6, **dadurch gekennzeichnet, dass** der Polymerisationsindex vom flüssigen Ammoniumpolyphosphat im Bereich von 20% bis 55% liegt.

8. Flammenhemmende Zusammensetzung nach Anspruch 7, **dadurch gekennzeichnet, dass** der Polymerisationsindex vom flüssigen Ammoniumpolyphosphat etwa gleich 25% ist.

9. Flammenhemmende Zusammensetzung nach einem der Ansprüche 5 bis 8, **dadurch gekennzeichnet, dass** die im Ammoniumpolyphosphat bestehende Ammoniumstickstoffkonzentration etwa gleich 10 Gew.-% vom gesamten Ammoniumpolyphosphatgehalt ist.

10. Flammenhemmende Zusammensetzung nach einem der Ansprüche 5 bis 9, **dadurch gekennzeichnet, dass** die im Ammoniumpolyphosphat bestehende Phosphoranhydridkonzentration etwa gleich 30 Gew.-% vom gesamten Ammoniumpolyphosphatgehalt ist.

11. Flammenhemmende Zusammensetzung nach einem der Ansprüche 5 bis 10, **dadurch gekennzeichnet, dass** sie zumindest ein Netzmittel und zumindest ein Farbmittel enthält.

12. Verfahren zur Hemmung der Korrosionsanfälligkeit von flüssigen flammenhemmenden Ammoniumpolyphosphat-Zusammensetzungen nach einem der Ansprüche 5 bis 11, durch den Zusatz einer korrosionshemmenden Mischung nach einem der Ansprüche 1 bis 4 in denselben.

13. Verfahren nach Anspruch 12, zur Korrosionshemmung von Niederschlägen von galvanisiertem Eisen von terrestrischen Brandbekämpfungsmitteln.

14. Verfahren nach Anspruch 13, zur Korrosionshemmung von galvanisiertem Eisen bis zu weniger als 0,012 mm pro Jahr.

## Revendications

1. Mélange inhibiteur de la corrosion pour des compositions ignifuges de polyphosphate d'ammonium, **caractérisé en ce qu'**il comprend du sulfate de zinc, dans sa forme anhydre ou hydratée, et une proportion de phosphate de calcium avec une dimension de grain entre 1 et 10 micromètres dans l'intervalle de 0,01 % à 5% en poids du contenu total de polyphosphate d'ammonium et de sulfate de zinc.

2. Mélange inhibiteur de la corrosion selon la revendication 1, **caractérisé en ce que** la proportion de phosphate de calcium avec une dimension de grain entre 1 et 10 micromètres se trouve dans l'intervalle de 0,1% à 0,5% en poids du contenu total de polyphosphate d'ammonium et de sulfate de zinc.

3. Mélange inhibiteur de la corrosion selon la revendication 1 ou 2, **caractérisé en ce que** la concentration de sulfate de zinc, dans sa forme anhydre ou hydratée, se trouve dans l'intervalle de 0,01% à 5% en poids du contenu total de polyphosphate d'ammonium et de sulfate de zinc.

4. Mélange inhibiteur de la corrosion selon la revendication 3, **caractérisé en ce que** la concentration de sulfate de zinc, dans sa forme anhydre ou hydratée, se trouve dans l'intervalle de 0,1% à 0,5% en poids du contenu total de polyphosphate d'ammonium et de sulfate de zinc.

5. Composition ignifuge, particulièrement destinée à lutter contre l'incendie avec des moyens terrestres, du type qui contient du polyphosphate d'ammonium liquide, **caractérisée en ce qu'**elle comprend le mélange inhibiteur de la corrosion tel que défini dans l'une quelconque des revendications 1 à 4.

6. Composition ignifuge selon la revendication 5, **caractérisée en ce que** le polyphosphate d'ammonium liquide a un indice de polymérisation dans l'intervalle de 10 à 70%, une concentration de nitrogène d'ammonium dans l'intervalle de 7 à 12% en poids du contenu total de polyphosphate d'ammonium et une concentration d'anhydre phosphorique dans l'intervalle de 20 à 37% en poids du contenu total de polyphosphate d'ammonium.

7. Composition ignifuge selon la revendication 5 ou 6, **caractérisée en ce que** l'indice de polymérisation du polyphosphate d'ammonium liquide se trouve dans l'intervalle de 20 à 55%.

8. Composition ignifuge selon la revendication 7, **caractérisée en ce que** l'indice de polymérisation du polyphosphate d'ammonium liquide est approximativement égale à 25%.

9. Composition ignifuge selon l'une quelconque des revendications 5 à 8, **caractérisée en ce que** la concentration de nitrogène d'ammonium présente dans le polyphosphate d'ammonium est approximativement égale à 10% en poids du contenu total de polyphosphate d'ammonium.

10. Composition ignifuge selon l'une quelconque des revendications 5 à 9, **caractérisée en ce que** la concentration d'anhydre phosphorique présente dans le polyphosphate d'ammonium est approximativement égale à 30% en poids du contenu total de polyphosphate d'ammonium.

11. Composition ignifuge selon l'une quelconque des revendications 5 à 10, **caractérisée en ce qu'**elle contient au moins un agent humectant et au moins un agent colorant.

12. Procédé pour inhiber la corrosivité des compositions ignifuges de polyphosphate d'ammonium liquide telles que définies dans l'une quelconque des revendications 5 à 11 en incorporant en leur sein un mélange inhibiteur de la corrosion tel que défini dans l'une quelconque des revendications 1 à 4.

13. Procédé selon la revendication 12, pour inhiber la corrosion des dépôts de fer galvanisé à partir de moyens terrestres de lutte contre l'incendie.

14. Procédé selon la revendication 13, pour inhiber la corrosion du fer galvanisé à moins de 0,012 mm par an.
